# EUROPEAN PATENT SPECIFICATION

(11) **EP 2 915 435 B1**
(45) Date of publication and mention of the grant of the patent: **31.05.2017**
(21) Application number: 14157598.5
(22) Date of filing: 04.03.2014
(51) Int. Cl.: A23L 25/00, A23L 27/10, A23L 5/10, A23P 20/10

(54) **Method for preparing flavoured dry roasted nut products, and snack food products derived therefrom**
Verfahren zur Herstellung aromatisierter trocken gerösteter Nussprodukte und Snack-Nahrungsmittelprodukte daraus
Procédé de préparation de produits à base de noix torréfiée sèche aromatisée et produits alimentaires à grignoter dérivés de ceux-ci

(43) Date of publication of application: 09.09.2015
(73) Proprietor: Intersnack Group GmbH & Co. KG, 40468 Düsseldorf (DE)
(72) Inventor: van Haren, Catharina Gertruda Anna Gerarda, 7006 DC Doetinchem (NL)
(74) Representative: Becker Kurig Straus

(56) References cited:
- WO-A1-2009/097235
- US-A- 4 522 833

## Description

### FIELD OF THE INVENTION

The present invention is in the field of food products, particularly in the field of snacks food and snack products like nuts, legumes, and seeds. The present invention relates to a method for the preparation of, preferably flavoured, dry roasted nuts and snack food products. The invention further relates to seasoned dry roasted snack products obtained by the method of the invention, more particularly to nut snack products endowed with an improved texture, tastiness (including greater diversity of taste and flavours), and visual attractiveness as well as with an increased stability against moisture, and a longer shelf life.

### BACKGROUND OF THE INVENTION

There is a sustained interest and demand for seasoned roasted snack products (e.g. nuts, legumes, beans and seeds) with increased taste profile (i.e. greater diversity of flavours or tastes), improved taste (palatability), texture, appearance, and increased shelf life.

Several methods have been described for the preparation of roasted snack products having a coating comprising seasoning agents. For instance European patent application EP 2 236 045 A1 describes a method for the preparation of chocolate roasted almonds, where the almonds are sprayed with a liquid starch blend, then coated with a dry blend of seasonings, and than roasted in a dry roast oven. American patent US 4,161,545 discloses a method for the preparation of honey coated roasted nut product, which involves the step of coating raw nuts with honey and water, followed by coating the nuts with a dry mixture containing sugar and starch, and then roasting the coated nuts. European patent application EP 0 267 757 A2 provides a method for the preparation of coated dry roasted nuts involving the steps of applying a uniform coating of starch to the nuts, followed by applying a layer of gelatin to the nuts, and then a layer of a seasoning mix prior to roasting the nuts. Canadian patent application CA1096694 A describes a method to prepare salted roasted nuts consisting of coating the nuts with a salted aqueous solution and roasting the nuts by deep frying the nuts in a hot oil bath. WO 2009/097235 discloses a preparation of a roasted peanut with a coating, prepared by preparing a pre-coated peanut core for 30 minutes at 143 °C. WO 2009/097235 is also about panned product where the edible core cannot be seen anymore and contains starches.

One notorious disadvantage associated with the use of traditional methods such as those described above is the production of snack products having a rather limited taste profile and limited taste complexity (i.e. limited to meaty and savoury tastes). While traditional methods are widely used for the preparation of roasted snack products (e.g. nuts, legumes or seeds) coating compositions comprising seasonings conferring tastes or flavours falling under the general categories 'salty' and 'sweet' (chocolate or honey), traditional methods are rather unsuited for coating compositions comprising other types of ingredient such as herbs (e.g. parsley, rosemary, dill, chives, oregano, coriander, basil, and the like) and spices (e.g. paprika, curry, chili, cinnamon, and the like). Specifically, the problem lies with the roasting procedure per se, where high temperatures are needed to obtain the desired brownish appearance and the typical tastiness of roasted snack products. Such high temperatures are particularly detrimental for coating compositions comprising herbs, since herbs readily burn during the roasting process, giving the final snack products an undesirable taste ('burnt' taste) and appearance (e.g. blackened-, ashy-, powdery-, dusty look). Snack food products prepared by traditional methods also lack diversity in terms of visual attractiveness. That is because the traditional methods, particularly the roasting process, is also detrimental to other heat-sensitive ingredients such as spices (e.g. paprika, curry, chili, cinnamon etc.), which in addition to give flavour and taste also serve as decorative or visual elements on snack food products.

Therefore, there is a need for improved methods which are more suitable for the preparation of, preferably flavoured, roasted snack products. Particularly, there is a need for improved methods that are suitable for coating composition comprising heat-sensitive elements. It is an object of the present invention to provide an improved method lacking the limitations of the prior art. It is another object of the present invention to provide snack products with a greater taste profile or taste diversity (i.e. beyond "meaty" and "savoury"), improved flavour or tastiness (e.g. no burn taste), texture (e.g. more crispy) and appearance (e.g. shiny, colourful). It is a further object of the invention to provide snack products having enhanced resistance to moisture and long shelf life without deterioration of flavour (taste), texture, and/or appearance over time. Other objects and advantages of the present invention will become apparent from the following description.

### SUMMARY OF THE INVENTION

The above objectives are achieved by the method according to claim 1 and the product according to claim 11, while the subclaims contain special embodiments of the invention.

Therefore, the invention relates to a method for preparing roasted snack products, and snack products obtained thereby. Particularly, the present inventor has developed an improved method for preparing roasted snack food products which are layered or covered with one or more layers of a composition comprising seasoning agents and/or visual agents, wherein said method is particularly suitable for compositions comprising heat-sensitive seasoning agents and/or visual agents. The term "heat-sensitive" is understood to refer to seasoning agents or visuals agents which are sensitive (i.e. likely to burn or to acquire an undesirable appearance or taste) to high temperatures such as the temperatures typically used during roasting, which range between 135°C and 250°C. The method of the invention is also suitable for coating compositions comprising seasoning agents or visual agents which are not heat-sensitive (i.e. not likely to burn or change appearance or taste).

The present inventor has adapted the traditional methods to arrive to the present method. Specifically, the present inventor has devised a procedure wherein the 'roasting step' is performed prior the 'coating step', i.e. where the hot snack food product is layered or covered with a composition comprising one or more seasoning agents and/or salt and/or visual agents. Such adaptation (among other things) distinguishes the present method from the existing methods where the opposite is typically done (i.e. 'coating step' is performed before the 'roasting step').

The present inventor observed that the present method not only abolishes the problems associated with the use of the traditional methods (e.g. alteration or destruction of certain types of seasoning agents or visual agents during the roasting process) but also extends the range of possible applications or usages of the method relative to what was previously achievable by way of traditional methods. Specifically, the present method allows for the preparation of a larger range of roasted snack products endowed with a greater diversity of flavours and taste as well as enhanced visual attractiveness.

More particularly, this invention relates to a process wherein an edible core (e.g. nut, peanut, bean and/or seed) is roasted at a first temperature range and then subsequently, while still at a temperature within the first range of temperature, is covered by a liquid coating composition comprising one or more adhesive agents as well as one or more seasoning agents and/or visual agents. Next, the roasted edible core can be maintained at a second temperature, which is lower than the first temperature range before letting the roasted edible core cool and dry at room temperature.

In sum, the present method lacks the limitations of the existing methods. Particularly, the present method has been found to produce snack food products which were endowed with several advantages not found in snack food products produced by other existing methods such as enhanced taste (i.e. no 'burnt' taste but more palatability), greater appearance (i.e. no 'ashy or 'blackened' appearance but more shiny, appetizing colours), improved texture (i.e. more crispy, non-greasy for the hands), increased resistance to moisture (i.e. not susceptible to capture moisture in humid conditions) and increased shelf life.

### DETAILED DESCRIPTION OF THE INVENTION

### Method of the invention

In a first aspect, the present invention relates to a method for preparing a, preferably flavoured, dry roasted snack food product, said method comprising steps in the following sequence:
- roasting an edible core at a first temperature range, wherein preferably the first temperature range is in the range of 155 °C to 160 °C, and wherein the edible core product is roasted for a period of 7 minutes to 40 minutes, preferably 20 minutes,
- providing at least one layer of a coating composition comprising heat sensitive seasoning agents or visual agent which are sensitive to high temperatures typically used during roasting, which range between 135°C and 250°C, to the roasted edible core, wherein the temperature of the edible core is still within the first temperature range;
- maintaining the roasted edible core at a second temperature range that is lower than the first range of temperature, wherein the second temperature range is in the range of 80 °C to 115 °C, preferably in the range of 95 °C to 100 °C for a period of 8 minutes to 30 minutes, preferably for a period of 15 minutes to 25 minutes, and
- cooling the roasted edible core.

In one embodiment, the edible core may be a product selected from the group consisting of peanuts, nuts, seeds, grains, plain cereals, beans (e.g. soya beans, kidney beans and the likes), potato slices or potato chips, popcorn, biscuit, biscotti, crackers, chips, pretzel, tortilla chip, and the like. The edible core is in a raw form (i.e. uncooked or unprocessed, unseasoned, with or without shell etc) or may be wholly or in pieces, (e.g. coarsely chopped or thinly sliced etc) prior to being used in the method of the present invention, i.e. when subjected to the first step of the method of the invention.

Any edible core can be used in the method of the invention. In an embodiment, a particular edible core may be chosen depending on the results desired (e.g. specific taste, texture, appearance etc). In an embodiment, the edible core may be selected from the group consisting of peanuts, nuts, beans, seeds, grains, potato slices or potato chips, corn, popcorn, biscuit, biscotti, crackers, chips, pretzel, tortilla chip. In a preferred embodiment, the edible core may be selected from the group consisting of peanuts, nuts, and seeds. In a further preferred embodiment, the edible core may be a nut. Any nut can be used in the method of the invention. In one embodiment, the nut may be preferably selected from the group consisting of cashew nuts, peanuts, almonds, walnuts, pecans, brazil nuts, hazelnuts, pistachio nuts, chestnuts, macadamia nuts, pine nuts, and the like. In a preferred embodiment, the nut may be selected from the group consisting of cashew nuts, peanuts, almonds, walnuts, pecans, brazil nuts, and hazelnuts, pistachio nuts or any suitable combination thereof. In a more preferred embodiment the nut may be a peanut and/or cashew nut and/or an almond nut.

In one other preferred embodiment, the edible core may be a bean. Any bean can be used in the method of the invention. In a preferred embodiment, the bean may be selected from the group consisting of soybeans, chick peas, dried peas, dried beans, and the like. In a more preferred embodiment, the bean may be a soybean.

In one other preferred embodiment, the edible core may be a seed. Any seed can be used in the method of the invention. In an embodiment, the seed may be selected from the group consisting of sunflower seeds, pumpkin seeds, chia seeds, sesame seeds, papaya seeds, hemp seeds, melon seeds, mustard seeds, pomegranate seeds, poppy seeds, flaxseeds apricot kernels, and the like. In a preferred embodiment, the seed may be selected from the group consisting of sunflower seeds, pumpkin seeds, and sesame seeds. In a more preferred embodiment, the seed may be a sunflower seed.

In a particularly preferred embodiment, the edible core may be a peanut. The present inventor has found that peanuts are particularly suitable for the method of the present invention. According to the invention, the edible core is roasted at a first temperature range. The terms "roasted" and "roasting" as used herein refer to a cooking method that uses dry heat, whether an open flame, oven, or other heat source. Roasting enhances flavour and changes the appearance of a food product through caramelization and Maillard browning on the surface of the food. Roasting may use indirect, diffused heat (as in an oven), and is suitable for slower cooking of meat in a larger, whole piece. Any roasting apparatus conventionally used for roasting can be used in the method of the present invention. For instance, a roaster oven or a drum roaster or a belt oven and the like can be used interchangeably in the method of the present invention. The roasting apparatus or oven may be equipped with a fan and/or a conveyor belt, and/or may have a rotating or vibrating device. The roasting process may be conducted on a batch (i.e. may be momentarily interrupted) or may be conducted on a continuous basis (without interruption) without affecting the quality of the snack food product obtained by the method of the invention. The edible core is roasted at a first temperature range for a period of 7 minutes to 40 minutes, preferably for a period of about 10 minutes to about 35 minutes, preferably for a period of about 10 minutes to about 30 minutes, preferably for a period of about 12 minutes to about 27 minutes, more preferably for a period of about 15 minutes to about 25 minutes. The present inventor has found that the temperature and duration of the first roasting step is particularly suitable for roasting an edible core, so as to obtain a desirable degree of dryness (i.e. through water evaporation) as well as a desirable degree of brownness and taste.

In one embodiment, the coating composition may be a liquid. The consistency of the liquid coating composition should be fluid enough so as to cover or wrap (wholly or partially) the edible core. The consistency of the liquid composition may also be adjusted depending on the type of edible core used in the method of the invention. Any liquid coating composition can be used in the method of the invention. The liquid coating composition may be applied according to any standard coating procedures known in the art, for instance using a coating drum apparatus, a spray device and the like.

In one preferred embodiment, the coating composition may be a water-based liquid coating composition. In the method of the present invention, the proportion or amount of each ingredient to be incorporated into the liquid coating composition is calculated in percentage by weight of a given ingredient over the total weight of the composition. Typically, the rest of composition can be water or other suitable liquids or liquid mixtures.

In one embodiment, the coating composition may comprise an adhesive agent. The term "adhesive agent" as used herein refers to substances or compositions having the properties of a glue or binder, which is preferably edible to humans. Non-limiting examples of adhesive agents include gum and thickening agents and derivative thereof.

The term "gum" as used herein is well known in the art and refers to an edible natural gum made of hardened sap taken from trees or plants or bacteria or seaweeds. Gums are polysaccharides of natural origin, capable of causing a large viscosity increase in solution, even at small concentrations. In the food industry they may be used as thickening agents, gelling agents, emulsifying agents, and stabilizers for icing, fillings, coating agent, chewing gum and other confectionery treats, snack foods and the like. Edible gum can also be obtained via synthetic pathways. Non-limiting examples of gum include agar, alginic acid, sodium alginate, carrageenan, gum arabic, guar gum, locust bean gum, gellan gum, xanthan gum, and the like.

The term "thickening agent" as used herein refers to edible substances or compositions having the ability to increase the viscosity of a solution or liquid/solid mixture without substantially modifying its other properties. "Thickening agents" are frequently used as coating agents applied to foods to impart taste or flavour and/or to modify the texture. Thickening agents can be of natural or synthetic origins. Non-limiting examples of thickening agents include wheat fiber, corn fibers, wheat dextrin, corn dextrin, potato dextrin, wheat starch, corn starch, potato starch, tapioca starch, maltodextrins, glucose syrops, dextrose, flour, instant starch, modified starch and the like.

In an embodiment, the composition may comprise 10% to 60% by weight of adhesive agent, preferably about 12% to about 50% by weight of adhesive agent, preferably about 14% to about 40% by weight of adhesive agent, preferably about 16% to about 30% by weight of adhesive agent, preferably about 18% to about 28% by weight of adhesive agent, preferably about 20% to about 26% by weight of adhesive agent, more preferably about 25% by weight of adhesive agent over the total weight of the composition.

In one embodiment, the adhesive agent may be a gum and/or a thickening agent. Any gum and gum derivatives, either natural or synthetic, can be used in the method of the present invention. In a preferred embodiment, the gum may be selected from the group consisting of agar, alginic acid, sodium alginate, carrageenan, gum arabic, guar gum, locust bean gum, gellan gum, and xanthan gum. In a more preferred embodiment, the gum may be gum arabic and/or xanthan. Gum may be dissolved in an aqueous solution according to conventional means known in the art. For instance, gum may be dissolved in hot water (e.g. 60°C), and stirred until completely dissolved, usually for a period of 30 min or more.

In another embodiment, any thickening agent can be used in the method of the present invention, either natural or synthetic. In a preferred embodiment the thickening agent may be selected from the group consisting of wheat fibers, corn fibers, wheat dextrins, corn dextrins, potato dextrins, wheat starch, corn starch, potato starch, tapioca starch, maltodextrins, glucose syrups, dextrose, flour, instant starch, and modified starch. The inventor has found that in certain embodiments, it may be advantageous to use one or more thickening agents so as to alter the consistency and/or adherence and/or the taste of the coating composition as taught herein.

In an embodiment of the invention, gum and thickening agents can be used interchangeably or in combination. In certain embodiment, it may be preferable to use gum, more preferably gum arabic and/or xanthan and/or modified starch.

In one embodiment, the coating composition may further comprise one ore more seasoning agents. The terms "seasoning agent" as used herein refer to any substances or extracts that impart flavour or tastiness (e.g. sweet, sour, salt, bitter, and umami) to food such as meats, vegetables, dough, snack food, candies, nuts, legumes, beans, seeds, and the like. Seasoning agents may be used to create or improve the taste or flavour of food that lack taste or do not have the desired flavour. Seasoning agents can be of natural origin (e.g. derived from plants or animals etc) or artificial origin (chemically synthesized to either resemble natural flavours or create flavours that do not exist in nature). Non-limiting examples of seasoning agents include sweet seasoning agents (e.g. chocolate, almond, vanilla, caramel, honey, granulated sugar, powdered sugar and the like.), spicy seasoning agents (paprika, smoked paprika, pepper, curry, cayenne, cumin, cinnamon, clove, saffron, nutmeg, turmeric, and the like), fruity seasoning agent (e.g. apricot, apple, banana, strawberry, orange, peach, blueberry, pear, kiwi and the like), and savoury seasoning agents (e.g. butter, salted butter, meat, smoked cheese, cheddar cheese, Monterey jack cheese, cream cheese, gouda cheese, blue cheese, ginger, celery, garlic, and the like), salty seasoning agent (e.g. salt, sea salt, low-sodium salt, iodized salt, and the like), herb seasoning agents (e.g., parsley, oregano, thyme, sage, dill, coriander, basil, cilantro, tarragon, Italian herbs and the like) and condiment seasoning agents (e.g. mustard, ketchup, tabasco, wasabi, chili, vinegar, teriyaki sauce and the like). The term "seasoning agent" may also comprise other substances and elements which are known in the art as 'top note'.

In one embodiment, seasoning agents may also consist of a mixture of seasonings so as to create new tastes and flavours. Non-limiting examples of seasoning agents comprising mixture of seasoning agents include "smoked paprika and chili seasonings", "oregano and Szechuan pepper seasoning", "rosemary and black pepper seasoning", "sundried tomato and basil seasoning", "roasted garlic and herbs seasoning", "pepper and Sicilian lemon seasoning", "black pepper and olive seasoning", "sweet Californian onion, garlic and herbs seasoning", "Mediterranean herbs, rosemary and thyme seasoning", "sea salt and herbs seasoning", "sea salt and dill seasoning", "smoked paprika and chili seasoning", "garlic and herbs seasoning", "sea salt and pepper seasoning", "chili apricot, sour cream and chives seasoning", "Kikkoman sea salt, oyster sauce and sea salt seasoning", "roasted paprika and sour cream seasoning", "sea salt and herbs seasoning", "smoked paprika and parsley seasoning", "salted butter, smoked paprika and chili seasoning", "smoked paprika and smoked salt seasoning", "basil, sea salt and roasted garlic seasoning", "red bell paprika and sea salt seasoning", "gorgonzola and bell pepper seasoning", "cheddar cheese and cracked peppercorns seasoning", "chocolate and caramel seasoning", "cocoa and vanilla' seasoning", "kebab and grilled onion seasoning", "bacon and paprika seasoning", "cheese, onion, tomato and mozzarella seasoning", "sea salt and lemon pepper seasoning", "shiny pesto and Italian herbs seasoning", and more mixture of seasoning agents to be developed. It is to be noted that the examples provided herein are illustrative and are by no means limiting the scope of what can be achieved by the method of the invention, i.e. many more seasoning agents and combination thereof that may be used in the method of the invention.

In one embodiment, the coating composition may comprise between 0.5% to 15% by weight of seasonings agent, preferably about 1.0% to about 12% by weight of seasonings agent, preferably about 2.0% to about 10% by weight of seasonings agent, preferably about 3.0% to about 8% by weight of seasonings agent, preferably about 3.5% to about 7.0% by weight of seasonings agent, preferably about 3.8% to about 6.5% by weight of seasonings agent, preferably about 4% to about 6% by weight of seasonings agent, more preferably about 5% by weight of seasonings agent. Any seasoning agents as taught herein or combination thereof can be used in the method of the invention.

In an embodiment, the coating composition may further comprise one or more visual agents. The term "visual agent" as used herein refers to any element that can be used to decorate or improve or change the visual appearance or texture of the external surface of food, particularly of snack food products such as peanuts, nuts, beans, and/or seeds. In the present invention, visual agents are used to impart colour and/or change in texture (more crunchy, more shiny, less sticky) to food and snack food product so as to make them more attractive, more appealing to the eyes. Visual agents may also, in addition to improve attractiveness or visual appearance, impart further taste and flavour to food and snack food products. Non-limiting examples of visual agents include spices (e.g. as paprika, pepper, curry, cayenne, cumin, cinnamon, clove, saffron, nutmeg, turmeric and the like), herbs (e.g. parsley, oregano, thyme, sage, dill, coriander, basil, cilantro, tarragon and the like), small seeds (e.g. sesame seeds, chia seeds, poppy seeds, hemp seeds, and the likes). Other non-limiting examples of visual agents include granulated sugar, powder sugar, salt, cracked peppercorn, as well as small fragments of dried tomato, olive, nuts, candies, dough, dried sea weed and the like. In the present invention, the visual agents are preferably used in the form of a powder and/or in the form of flakes and/or in the form of small fragments.

In one embodiment, about 10% to about 80% by weight of seasoning agent may be replaced by a visual agent as taught herein, in the coating composition. The present inventor has found that it may be advantageous to replace a certain proportion of the seasoning agents by visual agents in the coating composition so as to incorporate or embed visual (decorative) elements within (as opposed to on top) the coating composition so as to achieve a particular effect and/or appearance and/or taste in the final snack food product.

In an embodiment, the visual agent may have a particle size of about 0.01 mm to about 50 mm, preferably about 0.03 mm to about 40 mm, preferably 0.05 mm to about 30 mm, preferably 0.06 mm to about 20 mm, preferably 0.07 mm to about 10 mm, preferably 0.08 mm to about 8 mm, preferably 0.09 mm to about 6 mm, more preferably 0.1 mm to about 5 mm. In a preferred embodiment, the visual agent may have a particle size of at least 0.01 mm. The present inventor as found that visual agents falling within size range as taught herein remain well-embedded or well-apposed to the coating composition (i.e. do not fall off the edible core) while improving the general appearance and/or taste of the final snack food product. At least one layer of a coating composition as taught herein is applied to the roasted edible core while the roasted edible core is still at a temperature comprised within the first temperature range. The present inventor found that it was particularly advantageous to coat the roasted edible core while said core is still at a temperature within the first range of temperature as taught herein but above the second range of temperature as taught herein, so as to increase water evaporation from the roasted edible core. The edible core is maintained at a second temperature range of 80 °C to 115°C, preferably about 85°C to about 110°C, more preferably about 90°C to about 100°C. The edible core is maintained at said second range of temperature for a period of 8 minutes to 30 minutes, preferably for a period of about 12 minutes to about 27 minutes, more preferably for a period of 15 minutes to 25 minutes.

The present inventor has found that such temperature and duration regimen facilitated the drying of the roasted edible core by allowing further water evaporation from the edible core, which as a results rendered the edible core product more crunchy.

In an embodiment, it may be advantageous to maintain the coated edible core at a second temperature range as taught herein, particularly in the case when the amount of liquid (e.g. comprised in the coating composition) to be evaporated is more substantial.

In one embodiment, the method of the invention may further comprise the step of providing the edible core with a second of further layers of a coating composition. Any coating composition may be used to provide a second or further layer of coating on the edible core. In an embodiment, coating compositions comprising seasoning agent and/or visual agents as taught herein and combination thereof may be particularly preferred. The second and/or further layer of coating composition can be applied successively with and without a delay between application and/or with or without drying between application, using any known method in the art such as a coating drum apparatus.

In an embodiment, the method of the invention as taught herein may further comprise the step of applying one or more visual agents on top of the first and/or subsequent layers of the coating composition. Any visual agent or combination thereof as taught herein can be used for this purpose. For instance, one or more layers of coating composition comprising a seasoning agent as taught herein (e.g. paprika) may be applied to an edible core and allowed to dry before a further layer of coating composition is added upon which a visual agent as taught herein (e.g. parsley) is added (e.g. sprinkled) over said layer.

In a preferred embodiment, the visual agent may be in a dried form and/or in the form of small flakes and/or in the form of pieces and/or in a powder form. The visual agent may be of any size that is suitable for the purpose of decorating the external surface of an edible core. In certain embodiments, it may be preferable that the visual agents have a size as taught herein. In certain embodiments, the visual agent may be preferably paprika and/or parsley. The visual agent may be applied to the first and/or subsequent layer of coating composition by any standard methods known in the art. For instance, the visual agent can be applied on the first and/or subsequent layer of coating composition by simply sprinkling flakes and/or powder and/or pieces over the edible core product so as to achieve a desired results, e.g. give a particular colour and/or texture and/or further taste. Alternatively, the edible core can be immersed or partially immersed in the visual agent by any methods known in the art.

In one embodiment, the cooling of the roasted edible core may be performed at room temperature. The inventor has found that cooling the edible core in such as manner leads to a better adherence of the coating composition to the roasted core product, which provides a seal against moisture.

In one embodiment, the method of the invention as taught herein may further comprise the step of providing a coated roasted edible core as starting material for the preparation of a roasted snack food product. Any coated roasted edible core can be used in the method of the invention. A non-limiting example of coated edible core that could be used as starting material in the method of the invention is a nut coated with a gum-based coating composition, preferably a gum Arabic composition, comprising a seasoning agent as taught herein. In an embodiment, it may be particularly advantageous to provide a coated edible core product that is heat-insensitive. The present inventor has found that it may be particularly advantageous to use a coated edible core product as starting material in the method of the present invention so as to obtain a roasted edible core endowed with two or more coating layers. The present inventor also found that such edible core products have an enhanced taste (e.g. "increased taste sensation").

In an embodiment, it may be advantageous to directly allow the roasted edible core to cool or dry immediately after the coating step, particularly when the amount of liquid (e.g. comprised in the coating composition) to be evaporated is less substantial.

### Nut snack food products derived from the method of the present invention

In a further aspect, the present invention also relates to snack food products produced or obtainable by the method of the present invention as taught herein. The present inventor has found that the, preferably flavoured, nut snack food products produced by the method of the present invention were endowed with several advantages not found in snack food products produced by other existing methods. Particularly, the seasoning agents and/or visual agents were not affected by heat treatment during roasting. As a consequence, the snack food products produced by the method of the present invention are charcaterised with an enhanced taste (i.e. more palatability), improved appearance (i.e. more shiny, appetizing colours), improved texture (i.e. more crispy, non-greasy for the hands), increased resistance to moisture (i.e. not susceptible to capture moisture in humid conditions) and increased shelf life (without losing their taste and visual attributes). The present inventor has further observed that the oleoresins (i.e. naturally occurring mixture of an oil and a resin extracted from various plants) and volatiles were kept intact in the taste profile of the final snack food products.

As used herein and unless specifically stated or obvious from context, the term "about" is understood as within a range of normal tolerance in the art, for example within 2 standard deviations of the mean. About can be understood as within 10%, 9%, 8%, 7%, 6%, 5%, 4%, 3%, 2%, 1%, 0.5%, 0.1%, 0.05%, or 0.01% of the stated value.

As used herein, the term "and/or" refers to a situation wherein one or more of the stated cases may occur, alone or in combination with at least one of the stated cases, up to with all of the stated cases.

As used herein, the term "at least" refers to a situation wherein a particular value is the same as said particular value or more. For example, "at least 2" is understood to be the same as "2 or more" i.e., 2, 3, 4, 5, 6, 7, 8, 9, 10, 11, 12, 13, 14, 15, ... , etc.

As used herein, the terms "comprising" or "to comprise" and their conjugations, refer to a situation wherein said terms are used in their non-limiting sense to mean that items following the word are included, but items not specifically mentioned are not excluded. It also encompasses the more limiting verb "to consist of'. In addition, reference to an element by the indefinite article "a" or "an" does not exclude the possibility that more than one of the elements is present, unless the context clearly requires that there be one and only one of the elements. The indefinite article "a" or "an" thus usually means "at least one".

### EXAMPLE 1

An amount of 75 Kg of gum arabic is slowly introduced in 225 L of water at a temperature of 60 °C. The solution is stirred vigorously with an automated mixer until the gum arabic is completely dissolved. An amount of 120 Kg of seasoning agent is then added to the solution of gum arabic. The mixture is stirred with an automated mixer for 30 minutes at 60°C. The mixture is then ready for use.

### EXAMPLE 2

An amount of 1027 Kg of raw peanuts is placed in a roasting oven. The peanuts are roasted for a period of 20 minutes at 155 °C. Using a coating drum apparatus, a layer of a coating composition comprising a paprika-based seasoning agent is applied to the roasted peanuts while the roasted peanuts are still at a temperature ranging between 100°C to 155 °C. The coated roasted peanuts are subsequently maintained in the roasting oven for about 15 to 25 minutes at a temperature of 95 °C to 100 °C, after which the coated roasted peanuts are further cooled in the roaster to about room temperature.

### EXAMPLE 3

An amount of 1027 Kg of raw peanuts is placed in a roasting oven. The peanuts are roasted for a period of 20 minutes at 155 °C. Using a coating drum apparatus, a layer of a coating composition comprising a paprika-based seasoning agent is applied to the roasted peanuts while the roasted peanuts are still at a temperature ranging between 100°C to 155 °C. In a subsequent step, parsley flakes are sprinkled on top of the coating layer previously applied. The coated roasted peanuts are subsequently maintained in the roasting oven for about 10 minutes at a temperature of 95°C, after which the coated roasted peanuts are further cooled down to approximately room temperature.

## Claims

1. Method for preparing a, preferably flavoured, dry roasted snack food product, said method comprising steps in the following sequence:
- roasting an edible core, at a first temperature range, wherein the first temperature range is in the range of 155 °C to 160 °C, and wherein the edible core product is roasted for a period of 7 minutes to 40 minutes, preferably 20 minutes, wherein the edible core is in a raw form when used as starting material,
- providing at least one layer of a coating composition comprising heat sensitive seasoning agents or visual agent which are sensitive to high temperatures typically used during roasting, which range between 135 °C and 250 °C, to the roasted edible core, wherein the temperature of the edible core is still within the first temperature range;
- maintaining the roasted edible core at a second temperature range that is lower than the first range of temperature, wherein the second temperature range is in the range of 80 °C to 115 °C, preferably in the range of 95 °C to 100 °C for a period of 8 minutes to 30 minutes, preferably for a period of 15 minutes to 25 minutes, and
- cooling the roasted edible core.

2. Method according to claim 1, wherein the edible core is selected from the group consisting of nuts, beans and seeds.

3. Method according to claim 2, wherein the nut is a peanut and/or cashew nut and/or almond, the bean is a soybean and the seed is a sunflower seed.

4. Method according to claims 1-3, wherein the edible core is a peanut.

5. Method according to claim 1, wherein the coating composition is a water-based liquid.

6. Method according to claim 5, wherein the coating composition comprises 10% to 60% by weight of one or more adhesive agents.

7. Method according to claim 6, wherein the adhesive agent is a gum and/or a thickening agent.

8. Method according to claims 5-7, wherein the coating composition further comprises between 0.5% to 15% by weight of a seasoning agent, preferably a herb seasoning agent.

9. Method according to claims 1-8 further comprising the step of applying a visual agent on the first layer and/or further layers of the coating composition.

10. Method according claims 1-9, further comprising the step of providing a second and/or further layers of a coating composition to the roasted edible core.

11. A coated and, preferably flavoured, dry roasted snack food product obtainable by the method according to one or more of claims 1-10.

## Patentansprüche

1. Verfahren zur Herstellung eines, bevorzugt aromatisierten, trockengerösteten Snacklebensmittelprodukts, wobei das Verfahren die Schritte in der folgenden Reihenfolge umfasst:
- Rösten eines essbaren Kerns bei einem ersten Temperaturbereich, wobei der erste Temperaturbereich in dem Bereich von 155°C bis 160°C liegt und wobei das essbare Kernprodukt für eine Dauer von 7 Minuten bis 40 Minuten, bevorzugt 20 Minuten, geröstet wird, wobei der essbare Kern in einer Rohform vorliegt, wenn er als Ausgangsmaterial verwendet wird,
- Aufbringen wenigstens einer Schicht einer Ummantelungszusammensetzung, die wärmeempfindliche Gewürzmittel oder optische Mittel umfasst, die empfindliche gegenüber hohen Temperaturen sind, die typischerweise während des Röstens verwendet werden, die zwischen 135°C und 250°C liegen, auf den gerösteten essbaren Kern, wobei die Temperatur des essbaren Kerns immer noch in dem ersten Temperaturbereich liegt;
Halten des gerösteten essbaren Kerns in einem zweiten Temperaturbereich, der niedriger ist als der ersten Temperaturbereich, wobei der zweite Temperaturbereich in dem Bereich von 80°C bis 115°C, bevorzugt in dem Bereich von 95°C bis 100°C liegt, für eine Dauer von 8 Minuten bis 30 Minuten, bevorzugt für eine Dauer von 15 Minuten bis 25 Minuten, und
- Kühlen des gerösteten essbaren Kerns.

2. Verfahren gemäß Anspruch 1, wobei der essbare Kern ausgewählt ist aus der Gruppe, bestehend aus Nüssen, Bohnen und Samen.

3. Verfahren gemäß Anspruch 2, wobei die Nuss eine Erdnuss und/oder Cashewnuss und/oder Mandel ist, die Bohne eine Sojabohne ist und der Samen ein Sonnenblumensamen ist.

4. Verfahren gemäß Ansprüchen 1-3, wobei der essbare Kern eine Erdnuss ist.

5. Verfahren gemäß Anspruch 1, wobei die Ummantelungszusammensetzung eine wasserbasierte Flüssigkeit ist.

6. Verfahren gemäß Anspruch 5, wobei die Ummantelungszusammensetzung 10 Gew.-% bis 60 Gew.-% von einem oder mehreren Haftmitteln umfasst.

7. Verfahren gemäß Anspruch 6, wobei das Haftmittel ein Gummi und oder ein Eindickungsmittel ist.

8. Verfahren gemäß Ansprüchen 5-7, wobei die Ummantelungszusammensetzung weiterhin zwischen 0,5 Gew.-% bis 15 Gew.-% eines Würzmittels, bevorzugt eines Kräuterwürzmittels umfasst.

9. Verfahren gemäß Ansprüchen 1-8, weiterhin umfassend den Schritt des Auftragens eines optischen Mittels auf der ersten Schicht und/oder weiterer Schichten der Ummantelungszusammensetzung.

10. Verfahren gemäß Ansprüchen 1-9, weiterhin umfassend den Schritt des Aufbringens einer zweiten und/oder weiterer Schicht der Ummantelungszusammensetzung auf den gerösteten essbaren Kern.

11. Beschichtetes und, bevorzugt aromatisiertes, trockengeröstetes Snacklebensmittelprodukt, erhältlich durch das Verfahren gemäß einem oder mehreren der Ansprüche 1-10.

## Revendications

1. Procédé de préparation d'un produit alimentaire à grignoter grillé sec, de préférence aromatisé, ledit procédé comprenant les étapes dans la séquence suivante :
- grillade d'un coeur comestible, à une première plage de température, où la première plage de température se situe dans la plage de 155 à 160 °C, et où le produit de coeur comestible est grillé durant une période de 7 à 40 minutes, de préférence de 20 minutes, où le coeur comestible est sous forme brute quand il est utilisé comme matériau de départ,
- fourniture d'au moins une couche d'une composition de revêtement comprenant des agents assaisonnants thermosensibles ou un agent visuel qui sont sensibles à des températures élevées utilises généralement durant la grillade, qui se situent dans la plage allant de 135 à 250 °C, au coeur comestible grillé, où la température du coeur comestible se situe encore dans la première plage de température ;
- maintien du coeur comestible grillé à une seconde plage de température qui est inférieure à la première plage de température, où la seconde plage de température se situe dans la plage de 80 à 115 °C, de préférence dans la plage de 95 à 100 °C durant une période de 8 à 30 minutes, de préférence durant une période de 15 à 25 minutes, et
- refroidissement du coeur comestible grillé.

2. Procédé selon la revendication 1, dans lequel le coeur comestible est choisi dans le groupe constitué de noix, de haricots et de graines.

3. Procédé selon la revendication 2, dans lequel la noix est une cacahuète et/ou une noix de cachou et/ou une amande, le haricot est un haricot de soja et la graine est une graine de tournesol.

4. Procédé selon les revendications 1 - 3, dans lequel le coeur comestible est une cacahuète.

5. Procédé selon la revendication 1, dans lequel la composition de revêtement est un liquide à base d'eau.

6. Procédé selon la revendication 5, dans lequel la composition de revêtement comprend 10 à 60 % en poids d'un ou de plusieurs agents adhésifs.

7. Procédé selon la revendication 6, dans lequel l'agent adhésif est une gomme et/ou un agent épaississant.

8. Procédé selon les revendications 5 - 7, dans lequel la composition de revêtement comprend en outre entre 0,5 et 15 % en poids d'un agent assaisonnant, de préférence un condiment, de préférence un condiment aux fines herbes.

9. Procédé selon les revendications 1 - 8 comprenant en outre l'étape d'application d'un agent visuel sur la première couche et/ou d'autres couches de la composition de revêtement.

10. Procédé selon les revendications 1 - 9, comprenant en outre l'étape de fourniture d'une deuxième et/ou d'autre couches d'une composition de revêtement au coeur comestible grillé.

11. Produit alimentaire à grignoter grillé sec, revêtu et, de préférence aromatisé, que l'on peut obtenir selon une ou plusieurs des revendications 1 - 10.
